# EUROPÄISCHE PATENTSCHRIFT

(11) **EP 2 315 697 B1**
(45) Veröffentlichungstag und Bekanntmachung des Hinweises auf die Patenterteilung: **26.03.2014**
(21) Anmeldenummer: 09781278.8
(22) Anmeldetag: 30.07.2009
(51) Int. Cl.: B64C 1/06, B64C 7/00, B64D 11/00

(54) **STÜTZE FÜR EIN IM SELECTIVE LASER MELTING-VERFAHREN HERSTELLBARES FLUGZEUGSTRUKTURBAUTEIL SOWIE HERSTELLUNGSVERFAHREN UND VERWENDUNG**
SUPPORT FOR A AIRCRAFT STRUCTURAL COMPONENT PRODUCED IN A SELECTIVE LASER MELTING METHOD, USE AND PRODUCTION METHOD
SUPPORT POUR COMPOSANT STRUCTURAL D'AÉRONEF POUVANT ÊTRE PRODUIT SELON UN PROCÉDÉ DE FUSION SÉLECTIVE PAR LASER, UTILISATION ET PROCÉDÉ DE PRODUCTION

(30) Priorität: 28.08.2008 DE 102008044759; 28.08.2008 US 190373
(43) Veröffentlichungstag der Anmeldung: 04.05.2011
(73) Patentinhaber: Airbus Operations GmbH, 21129 Hamburg (DE)
(72) Erfinder: KLAHN, Christoph, 22049 Hamburg (DE); GYSEMBERG, Rüdy, 20537 Hamburg (DE); REHME, Olaf, 20148 Hamburg (DE)
(74) Vertreter: Kopf, Korbinian Paul
(86) Internationale Anmeldenummer: PCT/EP2009/059857
(87) Internationale Veröffentlichungsnummer: WO 2010/023059

(56) Entgegenhaltungen:
- EP-A1- 1 712 379
- DE-A1- 19 903 436
- FR-A1- 2 883 939
- GB-A- 303 028
- US-A- 2 593 714
- US-A1- 2005 104 315
- US-B1- 6 330 985

## Beschreibung

### GEBIET DER ERFINDUNG

Die vorliegende Erfindung betrifft eine Stütze für ein Strukturbauteil beispielsweise für ein Flugzeug. Insbesondere betrifft die vorliegende Erfindung eine längliche Stütze für ein hochbelastbares Strukturbauteil gemäss Anspruch 1, ein Strukturbauteil mit einer Stütze gemäss Anspruch 8, eine Verwendung eines Strukturbauteils in einem Flugzeug gemäss Anspruch 12, ein Verfahren zur Herstellung einer Stütze gemäss Anspruch 13 sowie ein Computer-Programm-Element zur Ausführung des Verfahrens gemäss Anspruch 14 und ein entsprechendes Computer-lesbares Medium gemäss Anspruch 15.

### HINTERGRUND DER ERFINDUNG

In heutigen Verkehrsflugzeugen werden an hochbelasteten Stellen eigens konstruierte Strukturbauteile eingesetzt. Als Beispiel für so ein Strukturbauteil mag die Befestigung eines "crew rest compartment" dienen, bei dem das Strukturbauteil einerseits mit diesem "compartment" fest verbunden ist und andererseits die in das Strukturbauteil eingetragenen Kräfte über Zug- und Druckstäbe an die Spanten des Flugzeugs übertragen werden können. Die Strukturbauteile können also die an einem Ende wirkenden Kräfte unter einer Änderung der Kraftrichtung auf das andere Ende übertragen, wobei in dem Strukturbauteil vorrangig Biegekräfte erzeugt werden. Solche Strukturbauteile werden meist aus Aluminium- oder Titanlegierungen in konventionellen Fertigungsverfahren wie beispielsweise Fräsen, Drehen oder Gießen hergestellt, wobei das Strukturbauteil einerseits aus Einzelteilen wie z.B. Stützen und Halteelementen zusammengesetzt sein kann, die miteinander z.B. durch Schweißen oder Nieten verbunden sein können. Andererseits kann ein solches Strukturbauteil auch aus einem Block mit einem entsprechend hohen Zerspanungsanteil hergestellt sein.

Es hat sich jedoch gezeigt, dass mittels dieser Verfahren nur bedingt Freiformflächen, Hinterschneidungen oder Hohlräume erzeugt werden können. In der Folge hiervon müssen die Bauteile, die mittels beispielsweise einem numerischen Verfahren optimiert werden, so gestaltet werden, dass diese in den gewählten konventionellen Fertigungsverfahren hergestellt werden können. So bleibt es nicht aus, dass die durch die Simulation als ideal erkannten Geometrien des Bauteils aus fertigungstechnischen Gründen nicht realisiert werden können bzw. dass an vielen Stellen des Strukturbauteils mehr Material stehen bleibt, als dies zur Kraftübertragung notwendig wäre. Das hierdurch erzielte höheres Gewicht ist gerade im Flugzeugbau unerwünscht, da dies während der Flugphase zu einem höheren Energieverbrauch führt.

Die US 6,330,985 B1, welche als nächstliegender bekannter Stand der Technik betrachtet wird, beschreibt einen Zug-Druck-Stab zur Verwendung in einem Flugzeugantrieb-Montagesystem.

Die DE 199 03 436 A1 beschreibt ein Verfahren zur Herstellung dreidimensionaler Formkörperaus zumindest teilweise aufschmelzbarem Material, bei dem das Laserstrahl-Präzisions-Auftragsschweißen oder selektives Lasersintern angewendet werden kann.

Die US 2,593,714 A beschreibt ein Verfahren, um ein Rumpfgehäuse mit einem Rahmen zu versehen und mittels Kunststoffröhren zu umwickeln.

Die FR 2 883 939 A1 beschreibt einen Verbindungsstab mit einem röhrenförmigen Körper, der eine äußere Röhre und eine konzentrische innere Röhre aufweist.

Die GB 303,028 A beschreibt eine zylindrische röhrenförmige Struktur für Flugzeugkonstruktionen und andere Anwendungen.

### ZUSAMMENFASSUNG DER ERFINDUNG

Demnach liegt der Erfindung die Aufgabe zugrunde, ein Strukturbauteil oder eine in einem Strukturbauteil angeordnete Stütze so herzustellen, dass an dem Strukturbauteil angreifende Biegekräfte vorteilhaft aufgenommen und/oder gewichtsoptimiert übertragen werden können.

Die Aufgabe wird gelöst durch den Gegenstand der jeweiligen unabhängigen Ansprüche. Weitere Ausführungsformen sind in den jeweiligen abhängigen Ansprüchen beschrieben.

Gemäß einem Aspekt der vorliegenden Erfindung ist eine längliche Stütze für ein hochbelastbares Strukturbauteil dazu ausgelegt, quer zu einer Längserstreckungsrichtung der Stütze angreifende Biegekräfte aufzunehmen. Die

Stütze weist eine Wandung auf, die einen länglichen Hohlraum der Stütze zumindest teilweise umschließt. Innerhalb des Hohlraums und quer zu der Längserstreckungsrichtung ist eine Verstärkungsstruktur so angeordnet, dass die Verstärkungsstruktur eine Biegesteifigkeit erhöht. Die Verstärkungsstruktur ist einstückig mit der Wandung ausgebildet, wobei sowohl die Wandung als auch die Verstärkungsstruktur aus einem aufschmelzbaren Material ausgebildet sind.

Wenn längliche mit einer Wandung umgebene Hohlkörper wie beispielsweise röhrenförmige Gebilde durch Biegekräfte beaufschlagt werden, so neigen diese Hohlkörper zu einem Knicken. Bei einem Knickvorgang verändert sich an der Knickstelle zuerst der Querschnitt. Durch das Anordnen einer Verstärkungsstruktur innerhalb des Hohlraumes an der potentiellen Knickstelle wird erreicht, dass zum Knicken an dieser Stelle eine höhere Biegekraft aufgebracht werden muss. In Folge hiervon wird beim Aufbringen der gleichen Biegekraft die Sicherheit gegen ein Ausknicken erhöht. Auch ist es mit dieser Anordnung möglich, bei gleicher Sicherheit gegen Ausknicken eine höhere Biegekraft in die erfindungsgemäße Stütze einzuleiten. Da die Wandung des Hohlkörpers ebenfalls einen Teil der Biegekräfte aufzunehmen vermag, wird die Wandung vorzugsweise geschlossen ausgeführt sein.

Durch die Verwendung von aufschmelzbarem Material ist es möglich, die Stütze in aufeinander aufbauenden und miteinander verbundenen Schichten zu erzeugen, wie dies weiter unten im Zusammenhang mit einem erfindungsgemäßen Herstellungsverfahren beschrieben wird. Hierzu eignet sich jedes aufschmelzbare Material wie beispielsweise Kunststoff oder Metall.

Gemäß der Erfindung ist die Verstärkungsstruktur scheibenförmig ausgebildet. Dabei kann der die Verstärkungsstruktur oder Scheibe begrenzende Rand vollflächig mit der Wandung des Hohlkörpers verbunden sein. Die Scheibe ist mit der Stütze einstückig ausgeführt. Durch diese Ausgestaltung bleibt der Querschnitt des Hohlkörpers an der potentiellen Knickstelle bei einer Beaufschlagung mit Biegekräften vollständig oder zumindest weitestgehend vollständig erhalten. Somit kann in die Stütze eine erheblich höhere Biegekraft eingeleitet oder durch die Stütze übertragen werden, als dies ohne eine solche Scheibe möglich wäre. An der Scheibe selbst greift vorzugsweise kein weiteres stützendes Bauteil an.

Gemäß einer weiteren bevorzugten Ausführungsform der Erfindung weist der Hohlraum mindestens eine Öffnung auf, die den Hohlraum mit einem die Stütze umgebenden Medium verbindet. Hierdurch kann dieses Medium, wie z.B. Luft, in den Hohlraum eindringen und einen Druckausgleich schaffen. In Folge kann eine solche Stütze beispielsweise in großen Höhen oder in tiefen Gewässern eingesetzt werden, da sich zwischen dem Medium und dem Hohlraum kein Druckunterschied aufbauen kann. Solche Druckunterschiede würden zu Spannungen innerhalb der Stütze führen, die die Stütze zusätzlich belasten würden. Daher können die durch eine mit Spannungen beaufschlagte Stütze übertragbaren Biegekräfte geringer sein, als bei einer Stütze, die nicht mit Spannungen beaufschlagt ist.

In vorteilhafter Weise weist die Stütze mindestens eine Öffnung auf, die so dimensioniert ist, dass ein zur Herstellung der Stütze erforderliches Granulat aus aufschmelzbarem Material aus dem Hohlraum entfernt werden kann. Wie bereits weiter oben erwähnt, kann die Stütze in einem generativen Schichtbauverfahren hergestellt werden..Hierbei wird Pulver oder Granulat aus aufschmelzbarem Material in Schichten aufgetragen, wobei ein Laser die Kontur der Stütze vorzugsweise vollständig aufschmilzt. Da durch dieses Fertigungsverfahren bedingt das nicht aufgeschmolzene Granulat bis zur Fertigstellung der Stütze auf einer Substratplatte verbleibt, wird dieses Granulat bei der Herstellung eines Hohlraumes in diesen Hohlraum eingeschlossen. Es ist zumindest aus Gewichts- und Kostengründen wünschenswert, dieses Granulat möglichst restlos aus dem Hohlraum zu entfernen. Dies kann durch die mindestens eine solche Öffnung erreicht werden.

Gemäß einer vorteilhaften Ausführungsform der Erfindung ist eine solche Öffnung in der Stütze in der Verstärkungsstruktur angeordnet. Und dort ist die Öffnung vorzugsweise entlang der Biegelinie, entlang derer sich die Stütze bei Beaufschlagung mit Biegekräften biegt, angeordnet. Somit ist die Öffnung an einer Stelle angeordnet, an der die durch die Biegekräfte erzeugten Spannungen bzw. Zug- und Schubkräfte ihren niedrigsten Wert aufweisen und damit den geringsten Einfluss auf die Bauteilfestigkeit haben. Auch wenn mehrere Verstärkungsstrukturen einen Hohlraum in mehrere Kammern unterteilen, ist durch diese Öffnungen sichergestellt, dass die Kammern miteinander und nach außen hin verbunden sind, ohne dass die Wandung der Stütze hierzu durchbrochen werden muss.

Gemäß einer weiteren bevorzugten Ausführungsform der Erfindung ist die Wandung der Stütze zumindest in einem Teilbereich gekrümmt. Gerade im Hinblick auf Biegekräfte, die zu einem plötzlichen Knicken der Stütze führen können, kann es von Vorteil sein, die Stütze in statisch unbelastetem Zustand in einer gebogenen Form auszubilden. Als Beispiel hierfür kann ein Viertelbogen oder auch ein S-Bogen dienen. Durch diese geometrische Ausbildung der Stütze kann eine definierte Aufteilung der eingeleiteten Kraft innerhalb der Stütze stattfinden. Somit ist es auch möglich, durch eine entsprechende Krümmung der Wandung der Stütze sogenannte Crash-Lasten gezielt abzubauen. Die Form der Stütze kann hierbei an die statischen und/oder dynamischen Anforderungen angepasst werden. Auch ist beispielsweise die Ausgestaltung der Stütze als ein sich verjüngendes Rohr oder auch als eine Stütze mit wechselnden Querschnitten denkbar, wobei unter einem wechselnden Querschnitt nicht nur die Größe, wie beispielsweise kleiner Durchmesser - großer Durchmesser, sondern auch die Form, wie beispielsweise Kreis - Ellipse, zu verstehen ist.

Gemäß einer weiteren vorteilhaften Ausgestaltung der Erfindung variiert bei der Stütze die Wandstärke der Wandung. Somit kann die Wandstärke an die durch die Stütze aufzunehmenden Kräfte angepasst werden. Da mit zunehmendem Abstand von einer aufgebrachten Kraft die Spannungen in der Stütze größer werden, können diese Spannungen durch eine Erhöhung der Wandstärke kompensiert werden. Auch kann beispielsweise eine zweite Kraft, die in einem Abstand von der ersten Kraft aufgebracht wird und die zusätzliche Spannungen in der Stütze erzeugt, durch lokale Änderung der Wandstärke aufgenommen werden. Somit kann sich also die Wandstärke der Wandung der Stütze nicht nur über ihre Längserstreckung sondern auch über ihren Umfang ändern. Damit kann die Wandstärke der Stütze an die tatsächlich auftretenden Belastungen angeglichen werden.

Gemäß einer weiteren zweckmäßigen Ausgestaltung der Erfindung ist die Stütze aus aufschmelzbarem Material gefertigt, wobei das aufschmelzbare Material zumindest ein Material aus der Gruppe, die Edelstahl, Werkzeugstahl, Titan, Aluminium, Kobalt, Nickel und Legierungen oder Mischungen dieser Materialien umfasst, aufweist. Durch die Verwendung dieser Materialien, die vorzugsweise ohne Binderzusätze verwendet werden, ist ein vollständiges Aufschmelzen der in Pulver verfügbaren Materialien möglich. In Folge kann sich eine ungefähr 100%-ige Bauteildichte ergeben, so dass eine Stütze gefertigt werden kann, deren mechanische Kennwerte weitestgehend den Spezifikationen des Materials entspricht. Dies bedeutet, dass beispielsweise bei einer Fertigung der Stütze aus einer Titanlegierung die der entsprechenden Titanlegierung zugrunde liegenden Kennwerte wie beispielsweise Elastizität auch der Stütze zugrunde liegen können.

Gemäß einem weiteren Aspekt der Erfindung ist ein Strukturbauteil mit einer Stütze einstückig ausgebildet. Das Strukturbauteil weist mindestens zwei Aufnahmen auf, wobei an der einen Aufnahme Kräfte auftreten können, die unter Erzeugung von Biegekräften an der Stütze an die andere Aufnahme übertragen werden. Durch die einstückige Ausbildung kann das Strukturbauteil vollständig aus einem Material bestehen. Auch gibt es vorzugsweise keine Einzelteile, die in das Strukturbauteil nachträglich eingesetzt werden brauchen. Durch die Einbindung der erfindungsgemäßen Stütze in das Strukturbauteil können nunmehr die in das Strukturbauteil eingeleiteten Kräfte unter Nutzung aller in den vorhergehenden Absätzen geschilderten Vorteile gewichtsoptimiert übertragen werden.

In einer weiteren vorteilhaften Ausführungsform der Erfindung ist das Strukturbauteil nach bionischen Gesichtspunkten topologisch optimiert. Eine solche Optimierung bedeutet, dass Freiformstrukturen geschaffen werden können, die in Bezug auf mechanische, thermische, elektrische, akustische, filtrierende und oberflächenbezogene Eigenschaften den Erfordernissen entsprechen. Die Ausgestaltung hierbei kann Muster aus der Natur, wie sie beispielsweise bei Röhrenknochen vorliegen, aufnehmen und weitestgehend nachbilden.

In einer weiteren vorteilhaften Ausführungsform der Erfindung ist das Strukturbauteil mit einer Stütze ausgebildet. Hierbei ist mit der Wandung der Stütze eine zusätzliche strukturelle Abstützung verbunden. Die Verstärkungsstruktur innerhalb des Hohlraumes der Stütze ist so angeordnet, dass die Verstärkungsstruktur die in der Stütze auftretende Biegekraft derart in die Abstützung einleitet, dass durch die Verstärkungsstruktur ein Knicken der Stütze erschwert wird.

Gemäß einem weiteren Aspekt der Erfindung wird ein Strukturbauteil, wie es oben beschrieben wurde, in einem Flugzeug verwendet.

Gemäß einem weiteren Aspekt der Erfindung wird eine Stütze durch ein generatives Schichtbauverfahren, insbesondere durch ein Selective Laser Melting-Verfahren, hergestellt. Hierbei wird eine Wandung ausgebildet, die einen länglichen Hohlraum der Stütze zumindest teilweise umschließt. Des Weiteren wird eine Verstärkungsstruktur innerhalb des Hohlraums und quer zu einer Längserstreckungsrichtung der Stütze derart ausgebildet, dass die Verstärkungsstruktur zumindest Anteile von an der Stütze angreifenden Biegekräften aufnehmen kann. Zusätzlich wird die Verstärkungsstruktur mit der Wandung einstückig ausgebildet, wobei sowohl die Wandung als auch die Verstärkungsstruktur aus einem aufschmelzbaren Material mittels des Schichtbauverfahrens ausgebildet wird.

Die Stütze kann hierbei Schicht für Schicht aufgebaut werden, wobei jeweils eine Schicht aus pulverförmigem Material auf einen bereits bearbeiteten Teil der Stütze aufgebracht und dann lokal aufgeschmolzen werden kann, so dass sie sich beim anschließenden Erstarren mit diesem verbinden kann. Zum Beispiel mit Hilfe von Laserstrahlen können beliebige dreidimensionale Geometrien auch mit Hinterschneidungen erzeugt werden. Somit kann eine Stütze erzeugt werden, die sich in konventioneller mechanischer oder gießtechnischer Fertigung nicht herstellen lässt. In der Regel ist zur Herstellung des Produkts erforderlich, das dessen Geometriedaten dreidimensional vorliegen und als Schichtdaten verarbeitet sind. Aus den vorliegenden CAD-Daten des Bauteils werden durch sogenanntes "Slicen" zahlreiche Schichten erzeugt.

Gemäß einem weiteren Aspekt der Erfindung ist ein Computer-Programm-Element dazu eingerichtet, wenn es auf einer computergesteuerten Vorrichtung zum Durchführen eines generatives Schichtbauverfahrens ausgeführt wird, das oben beschriebene Verfahren zur Herstellung einer Stütze auszuführen.

Gemäß einem weiteren Aspekt der Erfindung kann ein computerlesbares Medium mit einem darauf gespeicherten Computer-Programm-Element zur Durchführung eines generativen Schichtaufbaus zur Herstellung einer Stütze verwendet werden.

Weitere Einzelheiten und Vorteile der Erfindung ergeben sich aus den Unteransprüchen im Zusammenhang mit der Beschreibung von einem Ausführungsbeispiel, das anhand der Zeichnungen eingehend erläutert wird.

### KURZE BESCHREIBUNG DER ZEICHNUNGEN

- Figur 1: zeigt eine dreidimensionale Ansicht eines Strukturbauteils mit einer erfindungsgemäßen länglichen Stütze,
- Figur 2: zeigt eine Seitenansicht des Strukturbauteils aus Figur 1 mit einem teilweisen Aufriss der erfindungsgemäßen länglichen Stütze und
- Figur 3: zeigt einen Teil der Decke eines "crew rest compartments" von der Außenseite aus gesehen mit dem erfindungsgemäßen Strukturbauteil.

### DETAILLIERTE BESCHREIBUNG BEISPIELHAFTER AUSFÜHRUNGSFORMEN

Vorausschickend soll erwähnt werden, dass gleiche Teile in den Figuren gleiche Bezugszeichen aufweisen und dass die Zeichnungen lediglich schematisch und nicht notwendigerweise maßstabsgetreu sind.

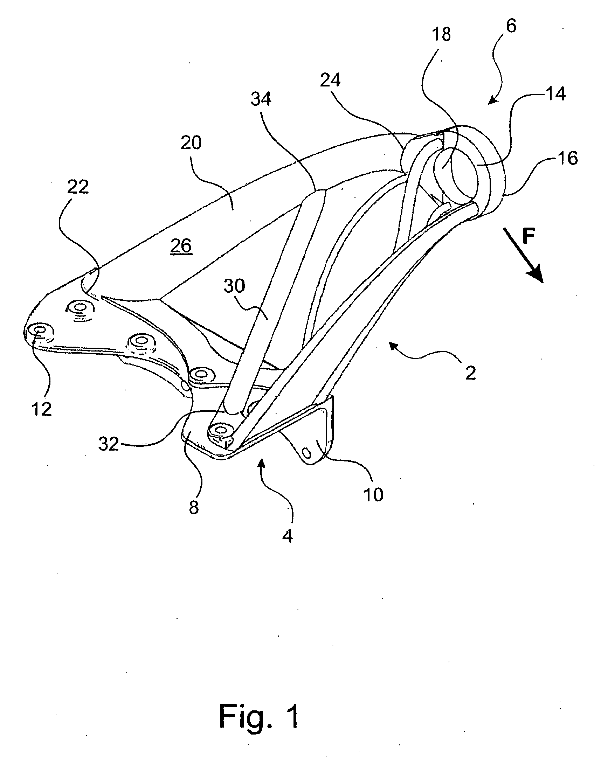

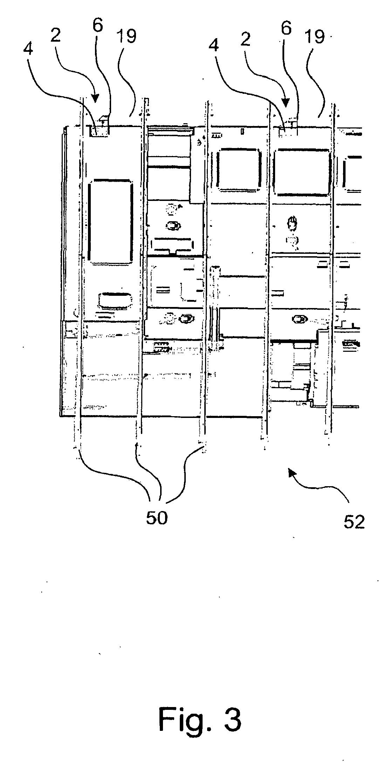

Figur 1 zeigt ein Strukturbauteil 2, das im Wesentlichen aus einem Winkel 4 und einem Auge 6 besteht. Der Winkel 4 ist aus zwei zueinander senkrecht stehenden Schenkeln 8, 10 gebildet, die mit Befestigungsbohrungen 12 versehen sind. Mittels geeignetem Befestigungsmaterial, das durch die Befestigungbohrungen 12 gesteckt wird, wird der Winkel 4 an einem "crew rest compartment" 52 (siehe hierzu Figur 3) befestigt.

Das Auge 6 besitzt zwei zueinander planparallele Planseiten 14, 16. Rechtwinklig zu den Planseiten 14, 16 weist das Auges 6 eine Durchgangsbohrung 18 auf, in der ein nicht dargestelltes Shock-Mount-Element sitzt, das mit einem Zug-Druck-Stab 19 (siehe hierzu Figur 3) gelenkig verbunden ist. Das Auge 6 ist zu dem Winkel 4 so angeordnet, dass die Planseiten 14, 16 längs einer Richtung F planparallel zu dem einen Schenkel 10 des Winkels 4 verlaufen und quer zur Richtung F einen Winkel von etwa 10° einschließen.

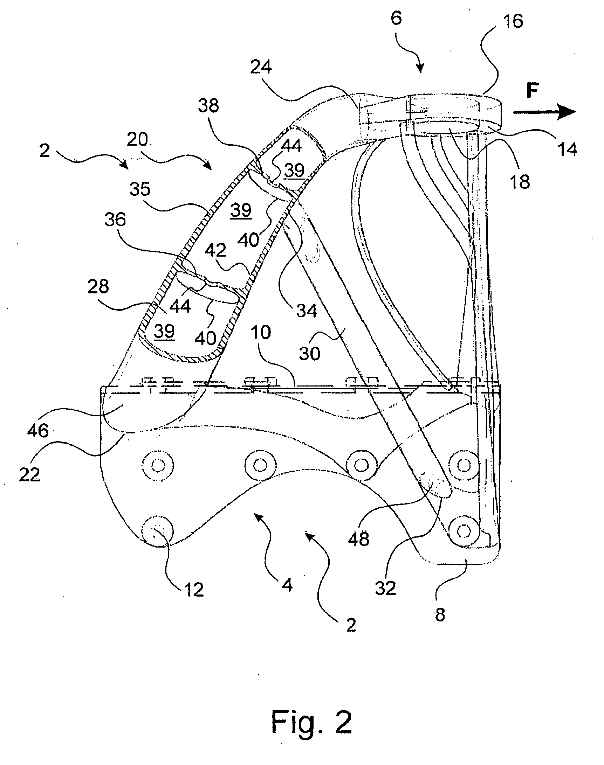

Das Auge 6 ist im Wesentlichen über eine Stütze 20 mit dem Winkel 4 fest verbunden. Hierbei grenzt die Stütze 20 mit ihrem unteren Rand 22 an den Schenkel 8 des Winkels 4 und mit ihrem oberen Rand 24 an das Auge 6. Die Stütze 20 besitzt eine Wandung 26, die einen Hohlraum 28 (siehe hierzu Figur 2) umschließt. Die Stütze 20 gleicht einem konischen gebogenem Rohr, wobei sich der größte Durchmesser am unteren Rand 22 und der kleinste am oberen Rand 24 befindet. Die Stütze 20 schließt zum Schenkel 8 des Winkels 4 einen spitzen Winkel ein. Die Stütze 20 ist in ihrem unteren Teil in Richtung des Auges 6 hin leicht gekrümmt, um dann im oberen Teil zum Auge 6 hin die Krümmung zu verstärken.

Eine Abstützung 30, die als ein gerades Rohr ausgebildet ist, stützt sich mit ihrem einen unteren Rand 32 auf dem Schenkel 8 des Winkels 4 ab. Ihr oberer Rand 34 ist mit dem zum Winkel 4 hinzeigenden Teil der Wandung 26 der Stütze 20 fest verbunden.

Die Wandung 26 der Stütze 20 ist in ihrer Stärke 35 von dem unteren Rand 22 zum oberen Rand 24 kontinuierlich abnehmend gestaltet. Zusätzlich ist der Hohlraum 28 durch zwei Verstärkungsstrukturen in Form einer unteren 36 und einer oberen Scheibe 38 in drei Kammern 39 unterteilt. Beide Scheiben 36, 38 sind quer zur Längserstreckungsrichtung der Stütze 20 angeordnet. Hierbei weisen die Scheiben 36, 38 Ränder 40 auf, die vollflächig und einstückig mit einer Innenseite 42 der Wandung 28 verbunden sind. Zusätzlich besitzen die Scheiben 36, 38 eine Öffnung 44, die sich entlang der Biegelinie der Stütze erstreckt. Durch diese Öffnungen 44 sind die Kammern 39 untereinander verbunden. Im Übrigen besitzt der Schenkel 8 innerhalb des unteren Randes 22 einen Durchbruch 46, durch den der Hohlraum 28 der Stütze 20 mit dem die Stütze 20 umgebenden Medium verbunden ist. Auch die als Rohr ausgebildete Abstützung 30 besitzt innerhalb ihres unteren Randes 32 einen Durchbruch 48 im Schenkel 8.

Eine am Auge 6 in der Richtung F eingeleitete Zug- oder Druckkraft übt auf die Stütze 20 Biegekräfte aus, die sich in quer zur Längserstreckungsrichtung der Stütze 20 auftretenden Querkräften äußern. Diese Querkräfte können zu einem Knicken der Stütze 20 und damit zu einem Versagen des Strukturbauteils 2 führen. Einem Knicken beispielsweise eines Rohres geht eine Querschnittsveränderung voraus. In Folge führt eine Aufrechterhaltung des Querschnitts an der Knickstelle dazu, dass bei gleichem Querkrafteintrag dieses Rohr nicht knickt oder der Querkrafteintrag erhöht werden muss, um das Rohr zu knicken. Daher ist die obere Scheibe 38 in Relation zu der Abstützung 30 derart positioniert, dass die obere Scheibe 38 den Querschnitt der Stütze 20 an der knickgefährdetesten Stelle aufrecht erhält. Somit können in gewichtsoptimierter Ausgestaltung der Stütze 20 die eingetragenen Querkräfte aufgefangen und weitergeleitet werden.

Die Herstellung des Strukturbauteils 2 erfolgt durch ein Selective-Laser-Melting-Verfahren (SLM-Verfahren). Hierbei wird durch sogenanntes "Slicen" aufgrund von vorliegenden CAD-Daten das Strukturbauteils 2 mittels zahlreicher Schichten erzeugt. Somit ist das gesamte Strukturbauteil 2 einstückig hergestellt.

Ein Pulver oder Granulat wird auf eine Bauplattform mit Hilfe beispielsweise eines Rakels vollflächig in einer Dicke von etwa 0,001 bis etwa 0,2 mm aufgebracht. Die Schichten werden durch eine Ansteuerung des Laserstrahls entsprechend der geslicten Kontur der Stütze schrittweise in das Pulverbett geschmolzen. Eine Bauplattform wird nun geringfügig abgesenkt und eine neue Schicht aufgezogen. Das Pulver wird durch Anheben einer Pulverplattform oder als Vorrat in dem Rakel zur Verfügung gestellt. Der Schichtaufbau erfolgt in vertikaler Richtung. Die Energie, die vom Laser zugeführt wird, wird vom Pulver absorbiert und führt zu einem lokal begrenzten Verschmelzen von Partikeln.

Da das SLM-Verfahren bedingt, dass die einzelnen Schichten durch die Ansteuerung eines Laserstrahls in ein Pulverbett eingeschmolzen werden, verbleibt das Pulver in Hohlräumen und wird nach der Fertigstellung durch entsprechende Öffnungen entfernt. Bei dem Strukturbauteil 2 sind zum restlosen Entfernen des Pulvers aus den Hohlräumen 28 oder Hohlkammern 39 hierzu die Öffnungen 44 oder Durchbrüche 46,448 vorgesehen.

Als Werkstoff zur Herstellung des Strukturbauteils 2 kann z.B. eine Titanlegierung TiA16V4 verwendet werden.

Figur 3 zeigt einen Teil der Decke des "crew rest compartments" 52 von außen aus gesehen. Zwischen den Spanten 50 sind zwei Strukturbauteile 2 angebracht, an deren Winkel 4 das "crew rest compartment" 52 befestigt ist. Die Strukturbauteile 2 sind über das Auge 6 mit einem Ende des Zug-Druck-Stabes 19 verbunden. Das andere Ende ist gelenkig mit dem Spant 50 verbunden.

Ergänzend ist darauf hinzuweisen, dass "umfassend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

### Bezuszeichenliste

- 2: Strukturbauteil
- 4: Winkel
- 6: Auge
- 8: Schenkel
- 10: Schenkel
- 12: Befestigungsbohrung
- 14: Planseite des Auges
- 16: Planseite des Auges
- 18: Durchgangsbohrung
- 19: Zug-Druck-Stab
- 20: Stütze
- 22: unterer Rand der Stütze
- 24: oberer Rand der Stütze
- 26: Wandung
- 28: Hohlraum
- 30: Abstützung
- 32: unterer Rand der Abstützung
- 34: oberer Rand der Abstützung
- 35: Stärke
- 36: untere Scheibe
- 38: obere Scheibe
- 39: Kammer
- 40: Rand
- 42: Innenseite
- 44: Öffnung
- 46: Durchbruch
- 48: Durchbruch
- 50: Spant
- 52: "crew rest compartment"

- F: Richtung

## Patentansprüche

1. Längliche gebogene Stütze (20) für ein hochbelastbares Strukturbauteil (2), wobei die Stütze (20) dazu ausgelegt ist, quer zu einer Längserstreckungsrichtung der Stütze (20) angreifende Biegekräfte aufzunehmen, wobei die Stütze (20) aufweist:
eine einen länglichen gebogenen Hohlraum (28) der Stütze (20) zumindest teilweise umschließende Wandung (26), welche ein röhrenförmiges Gebilde bildet;
eine scheibenförmig ausgebildete Verstärkungsstruktur (36; 38), wobei die Verstärkungsstruktur (36; 38) innerhalb des Hohlraums (28) und quer zu der Längserstreckungsrichtung angeordnet ist, um die Biegesteifigkeit zu erhöhen,
wobei die Verstärkungsstruktur (36; 38) einstückig mit der Wandung (26) ausgebildet ist,
wobei sowohl die Wandung (26) als auch die Verstärkungsstruktur (36; 38) aus einem aufschmelzbaren Material ausgebildet sind.

2. Stütze (20) nach Anspruch 1, wobei ein die scheibenförmige Verstärkungsstruktur (36; 38) begrenzender Rand vollflächig mit der Wandung (26) verbunden ist.

3. Stütze (20) nach Anspruch 1 oder 2, wobei der Hohlraum (28) mindestens eine Öffnung (44; 46) aufweist, die den Hohlraum mit einem die Stütze (20) umgebenden Medium verbindet.

4. Stütze (20) nach Anspruch 3, wobei die mindestens eine Öffnung (44; 46) so dimensioniert ist, dass ein zur Herstellung der Stütze (20) erforderliches Granulat aus aufschmelzbarem Material aus dem Hohlraum (28) entfernt werden kann.

5. Stütze (20) nach Anspruch 3 oder 4, wobei die mindestens eine Öffnung (44) in der Verstärkungsstruktur (36; 38) angeordnet ist.

6. Stütze nach einem der Ansprüche 1 bis 5, wobei eine Wandstärke (35) der Wandung (26) lokal variiert.

7. Stütze (20) nach einem der Ansprüche 1 bis 6, wobei das aufschmelzbare Material zumindest ein Material aus der Gruppe, die Edelstahl, Werkzeugstahl, Titan, Aluminium, Kobalt, Nickel und Legierungen und Mischungen dieser Materialien umfasst, aufweist.

8. Strukturbauteil (2) mit einer gebogenen Stütze (20) nach einem der Ansprüche 1 bis 8, wobei das Strukturbauteil (2) mit der Stütze (20) einstückig ausgebildet ist und wobei das Strukturbauteil (2) mindestens zwei Aufnahmen (4; 6) aufweist, wobei an der einen Aufnahme (6) Kräfte auftreten können, die unter Erzeugung von Biegekräften an der gebogenen Stütze (20) an die andere Aufnahme (4) übertragen werden.

9. Strukturbauteil (2) nach Anspruch 8, wobei das Strukturbauteil (2) nach bionischen Gesichtspunkten topologisch optimiert ist.

10. Strukturbauteil (2) nach Anspruch 8 oder 9, wobei mit der Wandung (26) der Stütze (20) eine Abstützung (30) verbunden ist und
wobei die Verstärkungsstruktur (38) innerhalb des Hohlraumes (28) der Stütze (20) so angeordnet ist, dass die Verstärkungsstruktur (38) die in der Stütze (20) auftretende Biegekraft derart in die Abstützung (30) einleitet, dass durch die Verstärkungsstruktur (38) ein Knicken der Stütze erschwert wird.

11. Strukturbauteil (2) nach einem der Ansprüche 8 bis 10,
wobei eine der zwei Aufnahmen als Winkel (4) mit zwei zueinander senkrecht stehenden Schenkeln (8, 10) ausgebildet ist, und
wobei eine andere der zwei Aufnahmen als Auge (6) mit zwei planparallelen Planseiten (14, 16) und einer Durchgangsbohrung (18) ausgebildet ist, wobei das Auge (6) mit dem Winkel (4) über die Stütze (20) fest verbunden ist und das Auge (6) zu dem Winkel (4) so angeordnet ist, dass die Planseiten (14, 16) längs einer Richtung (F) planparallel zu dem Schenkel (10) des Winkels (4) verlaufen.

12. Verwendung eines Strukturbauteils (2) nach einem der Ansprüche 8 bis 11 in einem Flugzeug.

13. Verfahren zur Herstellung einer gebogenen Stütze (20) durch ein generatives Schichtbauverfahren, insbesondere durch ein Selective Laser Melting-Verfahren, wobei das Verfahren aufweist:
Ausbilden einer einen länglichen gebogenen Hohlraum (28) der Stütze (20) zumindest teilweise umschließenden Wandung (26), welche ein röhrenförmiges Gebilde bildet;
Ausbilden einer scheibenförmigen Verstärkungsstruktur (36; 38) innerhalb des Hohlraums (28) und quer zu einer Längserstreckungsrichtung der Stütze (20) derart, dass die Verstärkungsstruktur (36; 38) zumindest Anteile von an der Stütze (20) angreifenden Biegekräften aufnehmen kann, wobei die Verstärkungsstruktur (36; 38) mit der Wandung (26) einstückig ausgebildet wird,
und
wobei sowohl die Wandung (26) als auch die Verstärkungsstruktur (36; 38) aus einem aufschmelzbaren Material mittels des Schichtbauverfahrens ausgebildet wird.

14. Computer-Programm-Element, das, wenn es auf einer computergesteuerten Vorrichtung zum Durchführen eines generativen Schichtbauverfahrens ausgeführt wird, dazu eingerichtet ist, das Verfahren nach Anspruch 13 auszuführen.

15. Computerlesbares Medium mit einem darauf gespeicherten Computer-Programm-Element nach Anspruch 14.

## Claims

1. An curved elongated supporting pillar (20) for a high-strength structural component (2), wherein the supporting pillar (20) is designed to absorb bending forces that act transversely to a longitudinal direction of extension of the supporting pillar (20), wherein the supporting pillar (20) comprises:
a wall (26) which at least partially encloses an elongated cavity (28) of the supporting pillar (20) and which forms a tubular structure;
a disc-shaped reinforcement structure (36; 38), wherein the reinforcement structure (36; 38) is arranged within the cavity (28) and transversely to the direction of longitudinal extension in order to improve the flexural rigidity,
wherein the reinforcement structure (36; 38) is formed integrally with the wall (26),
wherein both the wall (26) and the reinforcement structure (36; 38) are formed with a meltable material.

2. The supporting pillar (20) of claim 1, wherein the disc-shaped reinforcement structure (36; 38) is connected over its entire surface to the wall (26).

3. The supporting pillar (20) of claim 1 or 2, wherein the cavity (28) comprises at least one aperture (44; 46) that connects the cavity to a medium that surrounds the supporting pillar (20).

4. The supporting pillar (20) of claim 3, wherein the at least one aperture (44; 46) is dimensioned in such a manner that a granulate comprising a meltable material, which granulate is required to manufacture the supporting pillar (20), can be removed from the cavity (28).

5. The supporting pillar (20) of claim 3 or 4, wherein the at least one aperture (44) is arranged in the reinforcement structure (36; 38).

6. The supporting pillar of any one of claims 1 to 5, wherein the thickness (35) of the wall (26) locally varies.

7. The supporting pillar (20) of any one of claims 1 to 6, wherein the meltable material comprises at least one material from the group comprising stainless steel, tool steel, titanium, aluminium, cobalt, nickel and alloys or mixtures of these materials.

8. A structural component (2) with a supporting pillar (20) of any one of claims 1 to 7, wherein the structural component (2) is formed integrally with the supporting pillar (20) and wherein the structural component (2) comprises at least two receiving devices (4; 6), wherein on one receiving device (6) forces can occur which while generating bending forces at the supporting pillar (20) are transferred to the other receiving device (4).

9. The structural component (2) of claim 8, wherein the structural component (2) is topologically optimised according to bionic aspects.

10. The structural component (2) of claim 8 or 9, wherein a structural support (30) is connected to the wall (26) of the supporting pillar (20), and
wherein the reinforcement structure (38) within the cavity (28) of the supporting pillar (20) is arranged in such a manner that the reinforcement structure (38) introduces the bending force occurring in the supporting pillar (20) in such a manner to the structural support (30) that as a result of the reinforcement structure (38) any buckling of the supporting pillar (20) is rendered more difficult.

11. The structural component (2) of one of claims 8 to 10, wherein one of the two receiving devices is realized as an elbow (4) with two branches being arranged perpendicular to each other;
wherein another one of the two receiving devices is realized as an eye with two plan surfaces (14, 16) being plan-parallel to each other and one through-opening (18),
wherein the eye (6) is fixedly connected to the elbow (4) via the support (20) and the eye (6) is arranged relative to the elbow (4) such that the plan surfaces (14, 16) extend along a direction (F) plan-parallel to the branch (10) of the elbow (4).

12. The use of a structural component (2) of any one of claims 8 to 11 in an aircraft.

13. A method for manufacturing a supporting pillar (20) by means of a generative layer manufacturing method, in particular by means of a selective laser melting method, with the method comprising:
forming a wall (26) that at least partially encloses an curved elongated cavity (28) of the supporting pillar (20);
forming a disk-shaped reinforcement structure (36; 38) within the cavity (28) and
transversely to a direction of longitudinal extension of the supporting pillar (20) in such a manner that the reinforcement structure (36; 38) can absorb at least some of the bending forces acting on the supporting pillar (20), wherein the reinforcement structure (36; 38) and the wall (26) are formed integrally, and
wherein both the wall (26) and the reinforcement structure (36; 38) are made from a meltable material by means of the layer manufacturing method.

14. A computer program element which when executed on a computer-controlled device for carrying out a generative layer manufacturing method is designed to implement the method of claim 13.

15. A computer-readable medium with a computer program element of claim 14 stored thereon.

## Revendications

1. Support oblong arqué (20) pour un élément structural (2) pouvant être fortement sollicité, le support (20) étant conçu pour recevoir des forces de flexion agissant transversalement à une direction longitudinale du support (20), le support (20) présentant :
une paroi (26) qui entoure au moins partiellement une cavité oblongue arquée (28) du support (20) et forme un corps tubulaire ;
une structure de renfort (36; 38) réalisée en forme de disque, la structure de renfort (36; 38) étant disposée à l'intérieur de la cavité (28) et transversalement à la direction longitudinale pour augmenter la résistance à la flexion,
dans lequel la structure de renfort (36; 38) est réalisée d'un seul tenant avec la paroi (26),
dans lequel aussi bien la paroi (26) que la structure de renfort (36; 38) sont réalisées en un matériau fusible.

2. Support (20) selon la revendication 1, dans lequel un bord délimitant la structure de renfort en forme de disque (36; 38) est relié à la paroi (26) sur toute la surface.

3. Support (20) selon la revendication 1 ou 2, dans lequel la cavité (28) présente au moins une ouverture (44; 46) qui relie la cavité à un milieu entourant le support (20).

4. Support (20) selon la revendication 3, dans lequel au moins une ouverture (44; 46) est dimensionnée de telle sorte qu'un granulat nécessaire à la fabrication du support (20) et composé d'un matériau fusible peut être enlevé de la cavité (28).

5. Support (20) selon la revendication 3 ou 4, dans lequel l'au moins une ouverture (44) est disposée dans la structure de renfort (36; 38).

6. Support selon une des revendications 1 à 5, dans lequel une épaisseur (35) de la paroi (26) varie localement.

7. Support (20) selon une des revendications 1 à 6, dans lequel le matériau fusible présente au moins un matériau du groupe composé d'acier inoxydable, d'acier à outils, de titane, d'aluminium, de cobalt, de nickel et d'alliages et de mélanges de ces matériaux.

8. Élément structural (2) comportant un support arqué (20) selon une des revendications 1 à 8, dans lequel l'élément structural (2) est réalisé d'un seul tenant avec le support (20) et dans lequel l'élément structural (2) présente au moins deux logements (4; 6), des forces peuvent être produites sur l'un des logements (6) et être transmises à l'autre logement (4) suite à la génération de forces de flexion sur le support arqué (20).

9. Élément structural (2) selon la revendication 8, dans lequel l'élément structural (2) est optimisé topologiquement selon des aspects bioniques.

10. Élément structural (2) selon la revendication 8 ou 9, dans lequel une entretoise (30) est reliée à la paroi (26) du support (20) et
dans lequel la structure de renfort (38) est disposée à l'intérieur de la cavité (28) du support (20) de telle sorte que la structure de renfort (38) induise dans l'entretoise (30) la force de flexion produite dans le support (20) de manière à entraver le pliage du support grâce à la structure de renfort (38).

11. Élément structural (2) selon une des revendications 8 à 10,
dans lequel l'un des deux logements est réalisé sous la forme d'une équerre (4) avec deux branches (8, 10) s'étendant perpendiculairement l'une par rapport à l'autre, et dans lequel l'autre des deux logements est réalisé sous la forme d'un oeil (6) avec deux côtés plans (14, 16) parallèles dans le plan et un trou débouchant (18),
dans lequel l'oeil (6) est solidaire de l'équerre (4) par l'intermédiaire du support (20) et l'oeil (6) est disposé par rapport à l'équerre (4) de telle sorte que les côtés plans (14, 16) s'étendent le long d'une direction (F) parallèlement dans le plan par rapport à la branche (10) de l'équerre (4).

12. Utilisation d'un élément structural (2) selon une des revendications 8 à 11 dans un avion.

13. Procédé de fabrication d'un support arqué (20) au moyen d'un procédé de fabrication additive par empilement de couches, en particulier au moyen d'un procédé de fusion sélective par laser, le procédé comprenant :
la formation d'une paroi (26) qui entoure au moins partiellement une cavité oblongue arquée (28) du support (20) et forme un corps tubulaire ;
la formation d'une structure de renfort réalisée en forme de disque (36; 38) à l'intérieur de la cavité (28) et transversalement à une direction longitudinale du support (20) de telle sorte que la structure de renfort (36; 38) puisse recevoir au moins en partie des forces de flexion agissant sur le support (20), la structure de renfort (36; 38) étant réalisée d'un seul tenant avec la paroi (26),
et
dans lequel aussi bien la paroi (26) que la structure de renfort (36; 38) sont réalisées en un matériau fusible au moyen du procédé de fabrication par empilement de couches.

14. Élément de programme informatique qui, lorsqu'il est mis en oeuvre sur un dispositif commandé par ordinateur pour réaliser un procédé de fabrication additive par empilement de couches, est agencé pour mettre en oeuvre le procédé selon la revendication 13.

15. Support lisible par ordinateur comprenant un élément de programme informatique selon la revendication 14 qui est enregistré sur celui-ci.
